# EUROPEAN PATENT SPECIFICATION

(11) **EP 3 120 692 B1**
(45) Date of publication and mention of the grant of the patent: **11.04.2018**
(21) Application number: 16735971.0
(22) Date of filing: 02.02.2016
(51) Int. Cl.: A01G 7/04

(54) **PLANT CULTIVATION APPARATUS**
PFLANZENZUCHTVORRICHTUNG
APPAREIL DE CULTURE DE PLANTES

(30) Priority: 25.05.2015 JP 2015105065
(43) Date of publication of application: 25.01.2017
(73) Proprietor: Panasonic Intellectual Property Management Co., Ltd., Osaka-shi, Osaka 540-6207 (JP)
(72) Inventor: FUKUI, Atsushi, Osaka, 540-6207 (JP); FUKUI, Yuko, Osaka, 540-6207 (JP)
(74) Representative: Vigand, Philippe
(86) International application number: PCT/JP2016/000519
(87) International publication number: WO 2016/189773

(56) References cited:
- WO-A1-2014/162848
- JP-A- H0 423 923
- JP-A- H04 200 322
- JP-A- 2010 115 158
- JP-A- 2010 178 682
- JP-A- 2016 042 816
- JP-B1- 4 314 316
- JP-B2- 2 552 601
- JP-B2- 4 834 761
- JP-B2- 4 834 761
- US-A1- 2013 000 185

## Description

### TECHNICAL FIELD

The present invention relates to a cultivation device.

### BACKGROUND ART

A plant is cultivated while light is emitted from above or from obliquely above (for example, refer to PTL 1 to PTL 4).

PTL 5 discloses a device where a plant is cultivated while light is emitted from under, from inflated cylindrical ducts composed of a light transmitting flexible material with light reflecting undersurfaces and light sources in the duct ends. The ducts are placed on the ground.

### Citation List

### Patent Literature

PTL 1: Published Japanese Translation No. 2013/021952 of the PCT International Publication
PTL 2: US 2013/000185 A1.
PTL 3: JP 4 314316 B1.
PTL 4: WO 2014/162848.
PTL 5: JP H04 200322 A.

### SUMMARY OF THE INVENTION

### PROBLEM TO BE SOLVED BY THE INVENTION

However, if solar or artificial light is emitted mainly from above, an intermediate portion of a plant is not sufficiently exposed to the light, thereby causing a possibility that the plant's growth may be hindered.

The present invention is made in order to solve the problem in the related art, and an object thereof is to provide a plant cultivation device which can emit light to not only an upper portion but also an intermediate portion of a plant.

### MEANS FOR SOLVING THE PROBLEM

In order to solve the above-described object, there is provided a plant cultivation device including a cultivation plate for holding a plant, a transparent hollow tube that is located above the cultivation plate while being spaced apart from the cultivation plate, and that internally has a hollow section, a lamp that is located above the transparent hollow tube while being spaced apart from the transparent hollow tube, and that emits light downward, a light source that introduces artificial light to the transparent hollow tube, and an air duct that supplies air to the hollow section. The transparent hollow tube has a ventilation opening through which the air supplied to the hollow section is blown upward. The transparent hollow tube has a prism by which the artificial light travelling in a longitudinal direction of the transparent hollow tube is reflected upward, at a position of the ventilation opening in a plan view.

### ADVANTAGEOUS EFFECT OF INVENTION

As described above, according to this plant cultivation device, light can be emitted to an intermediate portion of a plant.

### BRIEF DESCRIPTION OF DRAWINGS

FIG. 1 is a schematic side view of a plant cultivation device according to a first exemplary embodiment.
FIG. 2 is a schematic top view of the plant cultivation device according to the first exemplary embodiment.
FIG. 3 illustrates the plant cultivation device according to the first exemplary embodiment, which is viewed in a direction of an arrow A.
FIG. 4 is a view illustrating an optical path and an air passage in a multipurpose unit for ventilation and lighting according to the first exemplary embodiment.
FIG. 5 is a view illustrating an operation of the multipurpose unit for ventilation and lighting in plant cultivation according to the first exemplary embodiment.
FIG. 6 is a schematic view of the multipurpose unit for ventilation and lighting according to the first exemplary embodiment.
FIG. 7 is a schematic view of the multipurpose unit for ventilation and lighting according to the first exemplary embodiment.
FIG. 8 is a schematic top view of a multipurpose unit for ventilation and lighting according to another example of the first exemplary embodiment.

### DESCRIPTION OF EMBODIMENTS

Hereinafter, an exemplary embodiment is described with reference to the drawings.

### (First Exemplary Embodiment)

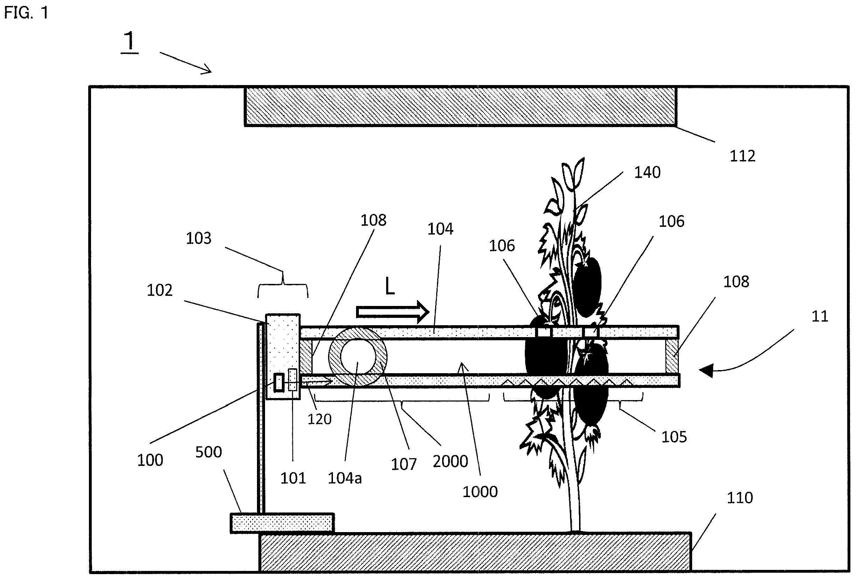

FIG. 1 is a schematic sectional view of plant cultivation device 1 according to the present exemplary embodiment. FIG. 1 is a view obtained when plant cultivation device 1 is viewed in a lateral direction. Plant cultivation device 1 has cultivation plate 110 for holding plant 140, and transparent hollow tube 104 that is located above cultivation plate 110 while being spaced from cultivation plate 110, and that internally has hollow section 1000. Plant cultivation device 1 has lamp 112 that is located above transparent hollow tube 104 while being spaced apart from transparent hollow tube 104, and that emits light downward. Plant cultivation device 1 includes light source 100 that introduces artificial light 120 to transparent hollow tube 104. Plant cultivation device 1 includes air duct 107 that supplies air to hollow section 1000. Transparent hollow tube 104 has ventilation opening 106 through which the air supplied to hollow section 1000 is blown upward. Transparent hollow tube 104 has prism 105 by which artificial light 120 travelling in longitudinal direction L of transparent hollow tube 104 is reflected upward, at a position of ventilation opening 106 in a plan view (when viewed from above).

Each configuration is described.

Light source 100 such as an LED which emits artificial light 120 is provided. There is provided wavelength filter 101 through which blue light of incident light emitted from light source 100 is transmitted. For example, wavelength filter 101 allows light having a wavelength of 400 nm to 500 nm to be transmitted therethrough. Wavelength filter 101 may not be provided. Reflector 102 is disposed so as to surround light source 100 and wavelength filter 101, and an inner surface thereof is a highly reflective surface. Light source 100, wavelength filter 101, and reflector 102 are collectively called light source unit 103, in some cases.

For example, transparent hollow tube 104 is formed of a transparent resin such as polycarbonate, acrylic, ABS, and the like. For example, transparent hollow tube 104 has a tubular shape of ϕ50. Hollow section 1000 is arranged in a central section inside transparent hollow tube 104. Hollow section 1000 is completely covered with transparent hollow tube 104. Light source unit 103 is disposed in one end of transparent hollow tube 104. Light source unit 103 is disposed so that artificial light 120 is emitted from light source 100 in longitudinal direction L of transparent hollow tube 104. Air duct 107, a hollow tube for supplying air, is disposed in transparent hollow tube 104. The air is introduced into hollow section 1000 from opening 104a of air duct 107. The introduced air travels along longitudinal direction L, and is blown to plant 140 after passing through ventilation opening 106 arranged in the other end of transparent hollow tube 104.

Prism 105 is formed on a lower side of a tubular outer shape of transparent hollow tube 104. Prism 105 causes artificial light 120 propagated inside transparent hollow tube 104 to be emitted in an upward direction while being totally reflected. However, the light emitted downward from lamp 112 located above is hardly reflected by prism 105. Therefore, the light can be emitted to a lower portion of plant 140 without the light of lamp 112 being blocked.

The air blown from ventilation opening 106 disposed on an upper side of transparent hollow tube 104 is led to an underside of a leaf of plant 140. Ventilation opening 106 is disposed near the top of prism 105. Ventilation plug 108 is disposed on both ends of hollow section 1000 of transparent hollow tube 104, and the air supplied from air duct 107 is blown from only ventilation opening 106.

Light source unit 103 and the above-described configuration including transparent hollow tube 104 are collectively called multipurpose unit for ventilation and lighting 11, in some cases. Multipurpose unit for ventilation and lighting 11 is held by guide 500. Guide 500 moves transparent hollow tube 104 in a direction separated from cultivation plate 110.

There is provided lamp 112 disposed on an upper side (ceiling side of plant cultivation device 1) of cultivation plate 110 and functioning as an upper side lighting system for emitting light toward a plant. Lamp 112 is a lamp which emits artificial light of a fluorescent lamp, an LED, or the like.

Cultivation plate 110 is arranged on a floor section, transparent hollow tube 104 is arranged in an intermediate section, and lamp 112 is arranged in a ceiling section. Cultivation plate 110, transparent hollow tube 104, and lamp 112 are separated from each other. Each space is arranged among cultivation plate 110, transparent hollow tube 104, and lamp 112. This arrangement can efficiently lead the light and the air to the intermediate portion of plant 140.

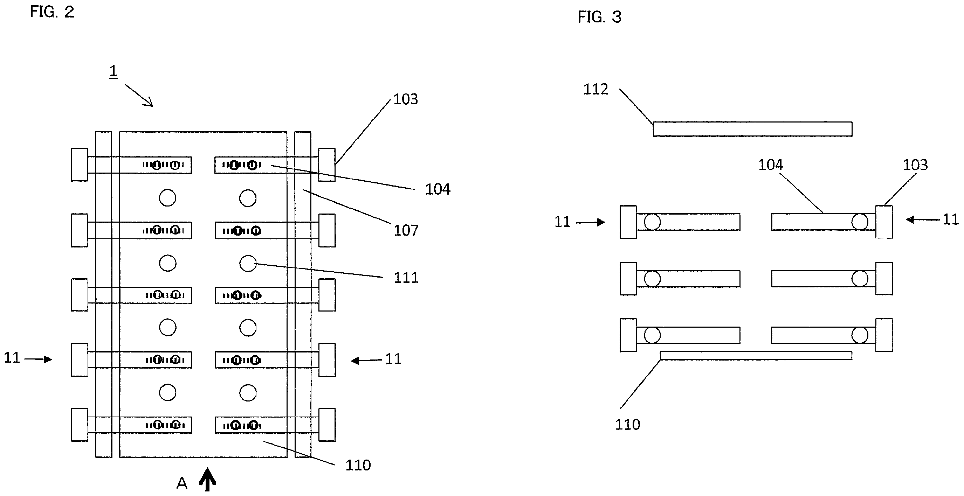

FIG. 2 is a schematic plan view obtained when plant cultivation device 1 is viewed from above (in a plan view). For example, cultivation plate 110 is formed of polystyrene foam. Although not illustrated, a nutrient solution for plant cultivation is disposed under cultivation plate 110, and cultivation plate 110 is installed so that plant roots are immersed therein. In order to dispose plants at a constant interval, a plurality of plant arrangement holes 111 are arranged in cultivation plate 110.

Multipurpose unit for ventilation and lighting 11 is disposed between plant arrangement holes 111 in a plan view. That is, transparent hollow tube 104 is arranged between the plants. FIG. 1 illustrates one multipurpose unit for ventilation and lighting 11. However, as illustrated in FIG. 2, a plurality of multipurpose units for ventilation and lighting 11 may be prepared. The plurality of multipurpose units for ventilation and lighting 11 may be disposed so as to be interposed from both sides of cultivation plate 110.

FIG. 3 illustrates plant cultivation device 1 which is viewed in a direction of an arrow A in Fig. 2. Multipurpose unit for ventilation and lighting 11 which includes transparent hollow tube 104 may be disposed at a plurality of stages between cultivation plate 110 and lamp 112. Even if the plant grows and becomes tall, the light and the air can be emitted and blown to a leaf surface of the plant. In addition, transparent hollow tube 104 is formed of a transparent material which transmits the light emitted from lamp 112. In this manner, even if transparent hollow tube 104 is configured as a multistage structure, lamp light is not blocked, and the light can be efficiently emitted to the plant. Prism 105 also does not block the light emitted from lamp 112.

With regard to plant cultivation device 1 configured as described above, an operation thereof is described.

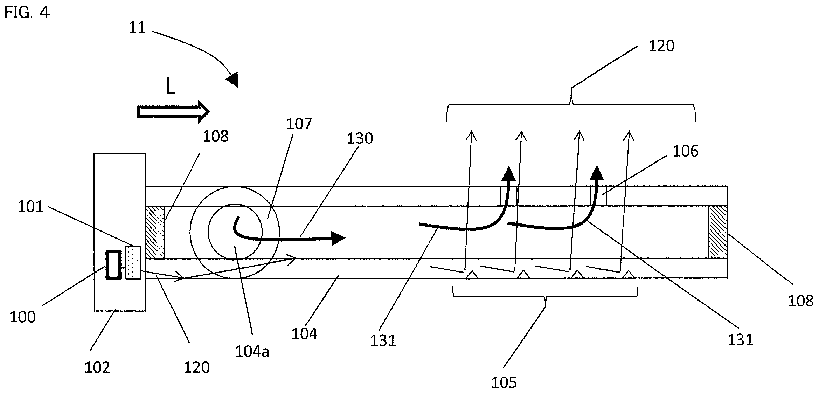

FIG. 4 is a view illustrating an optical path and an air passage in multipurpose unit for ventilation and lighting 11. Artificial light 120 emitted from light source 100 is incident on an end surface of transparent hollow tube 104 after only a blue wavelength range is transmitted by wavelength filter 101. Artificial light 120 incident on transparent hollow tube 104 is propagated in longitudinal direction L while being totally reflected on a transparent resin portion of transparent hollow tube 104, and is incident on prism 105 formed on a lower side of the outer shape of transparent hollow tube 104. Artificial light 120 incident on prism 105 is totally reflected on a tilting surface of prism 105, and is emitted in an upward direction of transparent hollow tube 104 after changing an optical path. That is, transparent hollow tube 104 has prism 105 by which artificial light 120 travelling in longitudinal direction L of transparent hollow tube 104 is reflected upward, at a position of ventilation opening 106 in a plan view.

On the other hand, since both ends of transparent hollow tube 104 are closed by ventilation plugs 108, air 130 supplied from air duct 107 flows in the hollow section of transparent hollow tube 104, and becomes blown air 131 blown upward from transparent hollow tube 104 through ventilation opening 106. Ventilation opening 106 is disposed near the top of prism 105. Accordingly, the light and the air can be emitted and blown from a position substantially the same as that of transparent hollow tube 104. The light and the air can be efficiently emitted and blown to the leaf surface of the plant. Blue light is led to an underside of the leaf of the plant, thereby opening pores of the leaf. Furthermore, it is possible to promote the growth of the plant by blowing the air to the plant.

As specific physiological effects belonging to blue light, many theses have mainly reported arabidopsis thaliana (for example, "Growth Control of Plant Depending on Blue Light Receptor Phototropin" written by Shinichiro Inoue and two persons, pages 4 to 8, No. 1, Vol. 19 of Photosynthesis Research, April 2009, Japanese Society of Photosynthesis Research). Mutants have been analyzed using a model plant arabidopsis thaliana, and thus, it has been reported that flower bud formation promotion, photomorphogenesis, phototropism, and action of blue light relating to a circadian clock or stomatal movement are noticeable.

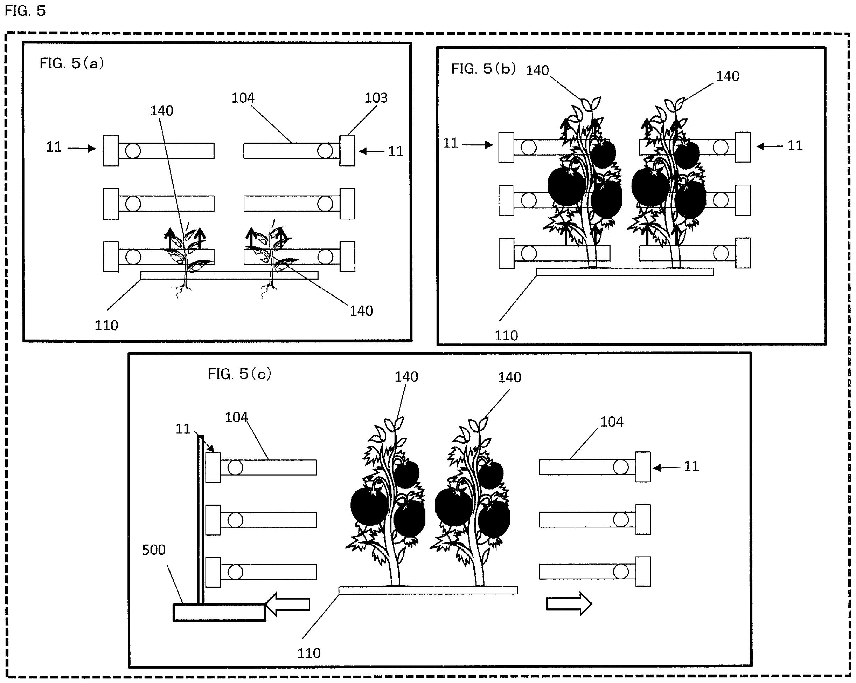

Next, FIG. 5 illustrates an operation of multipurpose unit for ventilation and lighting 11 in accordance with a growth stage of the plant. At an initial stage of plant cultivation, as illustrated in FIG. 5(a), the height of plant 140 is short. Accordingly, the light and the air are emitted and blown to the underside of the leaf of plant 140 by multipurpose unit for ventilation and lighting 11 located on the lower side. If plant 140 grows and becomes tall, and if a lamp unit and a ventilation port are provided in only a section close to cultivation plate 110, the light and the air are blocked by lower leaves of plant 140, and thus, the light and the air are less likely to reach upper leaves of plant 140. In contrast, as illustrated in FIG. 5(b), the multipurpose units for ventilation and lighting are disposed at multiple positions in a height direction. In this manner, even when plant 140 grows, the light and the air can be emitted and blown to the underside of the leaf of plant 140.

Transparent hollow tube 104 is a rod-shaped body which does not project outward. Accordingly, as illustrated in FIG. 5(c), when plant 140 is harvested, multipurpose unit for ventilation and lighting 11 can be simply detached by being pulled out from both sides. Plant 140 can be easily harvested. In other words, this plant cultivation device further includes guide 500 for moving transparent hollow tube 104 in a direction separated from cultivation plate 110. Guide 500 includes a rail, and more specifically guide 500 is configured to include a roller rail. Guide 500 holds a plurality of transparent hollow tubes 104, and fixes the plurality of transparent hollow tubes 104 so as to be uniformly located in a height direction.

According to this configuration, multipurpose units for ventilation and lighting 11 are disposed at multiple stages. Blue light is emitted from below, and air is concurrently blown. In this manner, it is possible to improve a growth state of the plant by opening pores on the underside of the leaf of the plant. In addition, a heat source such as a fluorescent lamp and the like is not disposed near the plant. Accordingly, there is no possibility of leaf scorching or the like.

In addition, transparent hollow tube 104 is employed. Accordingly, even if transparent hollow tube 104 is located between the lamp and the plant plate, the light emitted from the lamp is not blocked. Therefore, the light emitted from the lamp can be efficiently emitted to the base of the plant. In addition, at an initial stage of plant cultivation, even in a case where the height of the plant is equal to or shorter than the height of transparent hollow tube 104, the light emitted from the lamp can be efficiently emitted to the plant. Transparent hollow tube 104 is formed of a material in which a transmittance of the light emitted from lamp 112 is 80% or greater.

Artificial light 120 emitted from light source 100 is set to be white light, and wavelength filter 101 is employed. In this manner, colors of the lamp are easily adjusted. However, wavelength filter 101 may be omitted by using a lamp for emitting blue light as light source 100. In this case, energy efficiency is improved.

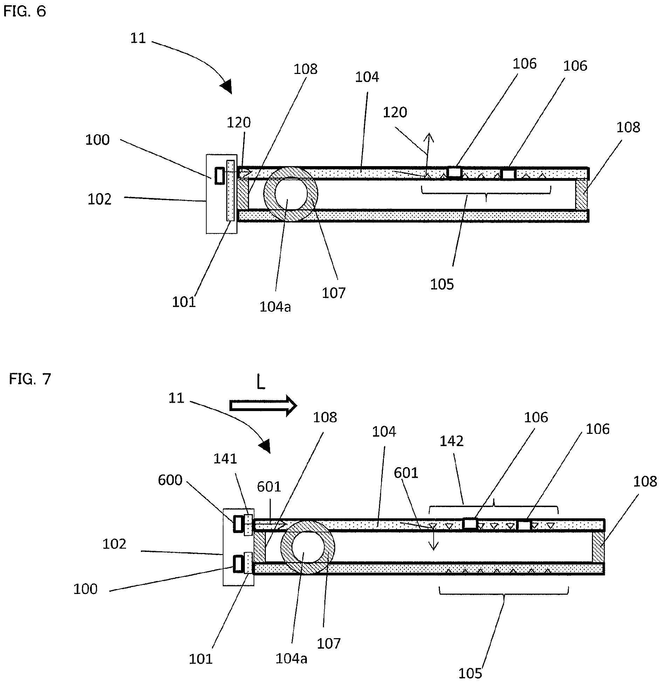

In the above-described configuration, light source 100 (first light source) for emitting artificial light 120 and prism 105 are formed on the lower side of transparent hollow tube 104. However, as illustrated in FIG. 6, prism 105 may be formed on the upper side of transparent hollow tube 104.

In addition, in an optical path through which artificial light 120 emitted from light source 100 reaches prism 105, transparent region 2000 in FIG. 1 in which prism 105 is not arranged is formed in transparent hollow tube 104. Transparent region 2000 has a transmittance higher than that of a region having prism 105 arranged therein. Therefore, it is possible to prevent the light from being unnecessarily scattered or absorbed. The light emitted from lamp 112 can be efficiently emitted to the plant. Prism 105 has a triangular cross section. However, a trapezoidal shape or any other shape may be employed.

As illustrated in FIG. 7, second prism 142 may be disposed on the upper side of the outer shape of transparent hollow tube 104, and second light source 600 and second wavelength filter 141 may be disposed on the upper side of the end surface of transparent hollow tube 104. That is, light source 100 functions as a first light source for emitting first artificial light as artificial light 120, and prism 105 functions as a first prism. Plant cultivation device 1 further includes second light source 600 which introduces second artificial light 601 to transparent hollow tube 104. Transparent hollow tube 104 further has second prism 142 by which second artificial light 601 travelling in longitudinal direction L of transparent hollow tube 104 is reflected downward, at a position facing first prism 105.

Prism 105 is arranged in only a portion inside transparent hollow tube 104. The arrangement of prism 105 is minimized. Accordingly, the light emitted from lamp 112 can be efficiently emitted to the vicinity of the base of the plant. Specifically, in a plan view of transparent hollow tube 104, it is preferable to design a region for disposing prism 105 so as to have an area of 10% to 30% of the whole area of transparent hollow tube 104. In addition, in a plan view of transparent hollow tube 104, it is preferable to design a region for disposing prism 105 and second prism 142 so as to have an area of 10% to 30% of the whole area.

For example, as second wavelength filter 141, a red color filter whose wavelength is 600 nm to 700 nm may be employed. Alternatively, second wavelength filter 141 may be omitted, and an auxiliary filter of lamp 112 in FIG. 3 may be used.

Since second light source 600 and second prism 142 are provided, the light can also be efficiently emitted to the surface of the leaf. Second prism 142 also does not block the light emitted from lamp 112. Second artificial light 601 including a red color is emitted to the surface of the leaf for the purpose of photosynthesis. Second light source 600 employs a light source for emitting only red light, and second wavelength filter 141 is omitted. In this manner, energy efficiency can be improved.

In the present exemplary embodiment, multipurpose unit for ventilation and lighting 11 is disposed at three stages. However, the number of stages is not limited thereto. Multipurpose unit for ventilation and lighting 11 is disposed parallel to the end surface of cultivation plate 110, but may be obliquely disposed. Even if a vertical position of multipurpose unit for ventilation and lighting 11 is fixed, a mechanism for changing the vertical position may be disposed in guide 500. Depending on the growth of plant 140, the vertical position of multipurpose unit for ventilation and lighting 11 may be changed.

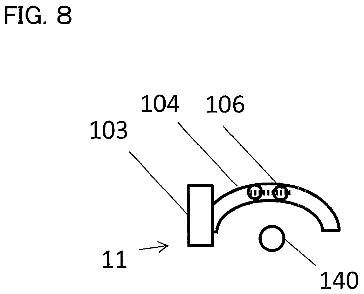

As illustrated in FIG. 8, transparent hollow tube 104 may have a curvature. Plant 140 is disposed near the center of the curvature, that is, the periphery of plant 140 is covered with transparent hollow tube 104. In this manner, the light can be more efficiently emitted to plant 140. Even in this case, the artificial light is propagated inside a wall surface of transparent hollow tube 104, and reaches each prism. It is preferable that a radius of curvature in the curvature is in a range from 50 mm to 500 mm. According to this range, the light can be more efficiently emitted to plant 140.

The diameter of ventilation opening 106 may be constant, or may be changed depending on the location. Ventilation opening 106 may be disposed at a plurality of locations so as to provide a place having a large ventilation volume and a place having a small ventilation volume. In addition, depending on a growth state of the plant, a light quantity of light source 100 or second light source 600 may be changed.

According to the present exemplary embodiment, for example, the light and the air can be positively emitted and blown to plants whose intermediate portions are less likely to be exposed to the light and the air, such as tall fruit and vegetable plants, leafy plants, or the like. The ventilation can promote transpiration, and can accelerate photosynthesis of the plants. The growth of the plants is promoted. Therefore, it is possible to increase a yield per area or a yield per hour.

The air is the earth's atmosphere, and means gas formed of many trace components including nitrogen, oxygen, and carbon dioxide. The air may contain water vapor.

### INDUSTRIAL APPLICABILITY

This plant cultivation device is applicable not only to a cultivation environment using artificial light such as plant factories and the like, but also to cultivation facilities using solar light such as greenhouses and the like, as an auxiliary lighting system thereof.

## Claims

1. A plant cultivation device (1) comprising:
a cultivation plate (110) for holding a plant (140); a transparent hollow tube (104) that is located above the cultivation plate while being spaced apart from the cultivation plate, and that internally has a hollow section (1000); a lamp (112) that is located above the transparent hollow tube while being spaced apart from the transparent hollow tube, and that emits light downward;
a light source (100) that introduces artificial light to the transparent hollow tube; and
an air duct (107) that supplies air to the hollow section,
wherein the transparent hollow tube has a ventilation opening (106) through which the air supplied to the hollow section is blown upward, and
wherein the transparent hollow tube has a prism (105) by which the artificial light travelling in a longitudinal direction of the transparent hollow tube is reflected upward, at a position of the ventilation opening in a plan view.

2. The plant cultivation device of Claim 1,
wherein the light source is a first light source which emits first artificial light as the artificial light,
wherein the prism is a first prism,
wherein the plant cultivation device further comprises a second light source (600) which introduces second artificial light to the transparent hollow tube, and
wherein the transparent hollow tube further has a second prism (142) by which the second artificial light travelling in the longitudinal direction of the transparent hollow tube is reflected downward, at a position facing the first prism.

3. The plant cultivation device of Claim 2,
wherein the first artificial light is blue light or white light, and
wherein the second artificial light is red light or white light.

4. The plant cultivation device of Claim 3,
wherein the first artificial light is blue light, and
wherein the second artificial light is red light.

5. The plant cultivation device of any one of Claims 1 to 4,
wherein a plurality of transparent hollow tubes are disposed at a plurality of positions in a height direction.

6. The plant cultivation device of any one of Claims 1 to 5,
wherein in a plan view of the transparent hollow tube, an area occupancy rate of the prism is in a range from 10% to 30% of the whole area of the transparent hollow tube.

7. The plant cultivation device of any one of Claims 1 to 6,
wherein the transparent hollow tube has a curvature.

8. The plant cultivation device of Claim 7,
wherein a radius of curvature in the curvature of the transparent hollow tube is in a range from 50 mm to 500 mm.

9. The plant cultivation device of any one of Claims 1 to 8, further comprising:
a guide (500) that moves the transparent hollow tube in a direction separated from the cultivation plate.

## Patentansprüche

1. Pflanzenzuchtvorrichtung (1), die Folgendes umfasst:
eine Kulturplatte (110) zum Halten der Pflanze (140);
ein transparentes hohles Rohr (104), das oberhalb der Kulturplatte angeordnet ist, während es von der Kulturplatte getrennt ist, und das innen einen hohlen Querschnitt (1000) aufweist;
eine Lampe (112), die oberhalb des transparenten hohlen Rohrs angeordnet ist, während sie von dem transparenten hohlen Rohr getrennt ist, und die Licht nach unten abgibt;
eine Lichtquelle (100), die künstliches Licht in das transparente hohle Rohr einleitet; und
einen Luftkanal (107), der dem Hohlprofil Luft zuführt,
wobei das transparente hohle Rohr eine Belüftungsöffnung (106) aufweist, durch die die dem Hohlprofil zugeführte Luft nach oben geblasen wird, und
wobei das transparente hohle Rohr ein Prisma (105) aufweist, durch das das in Längsrichtung des transparenten hohlen Rohrs verlaufende künstliche Licht an einer Stelle der Lüftungsöffnung in einer Draufsicht nach oben reflektiert wird.

2. Pflanzenzuchtvorrichtung nach Anspruch 1,
wobei die Lichtquelle eine erste Lichtquelle ist, die erstes künstliches Licht als das künstliche Licht abgibt,
wobei das Prisma ein erstes Prisma ist,
wobei die Pflanzenzuchtvorrichtung ferner eine zweite Lichtquelle (600) umfasst, die zweites künstliches Licht in das transparente hohle Rohr einleitet, und
wobei das transparente hohle Rohr ferner ein zweites Prisma (142) aufweist, durch das das in Längsrichtung des transparenten hohlen Rohrs verlaufende zweite künstliche Licht an einer Stelle gegenüber dem ersten Prisma in einer Draufsicht nach unten reflektiert wird.

3. Pflanzenzuchtvorrichtung nach Anspruch 2,
wobei das erste künstliche Licht blaues Licht oder weißes Licht ist, und
wobei das zweite künstliche Licht rotes Licht oder weißes Licht ist.

4. Pflanzenzuchtvorrichtung nach Anspruch 3,
wobei das erste künstliche Licht blaues Licht ist, und
wobei das zweite künstliche Licht rotes Licht ist.

5. Pflanzenzuchtvorrichtung nach einem der Ansprüche 1 bis 4,
wobei eine Mehrzahl von transparenten hohlen Rohren an einer Mehrzahl von Positionen in einer Höhenrichtung angeordnet sind.

6. Pflanzenzuchtvorrichtung nach einem der Ansprüche 1 bis 5,
wobei in einer Draufsicht auf das transparente hohle Rohr ein Flächenbelegungsgrad des Prismas in einem Bereich von 10 % bis 30 % der Gesamtfläche des transparenten hohlen Rohrs liegt.

7. Pflanzenzuchtvorrichtung nach einem der Ansprüche 1 bis 6,
wobei das transparente hohle Rohr eine Krümmung aufweist.

8. Pflanzenzuchtvorrichtung nach Anspruch 7,
wobei ein Krümmungsradius in der Krümmung des transparenten hohlen Rohrs im Bereich von 50 mm bis 500 mm liegt.

9. Pflanzenzuchtvorrichtung nach einem der Ansprüche 1 bis 8, die Folgendes ferner umfasst:
eine Führung (500), die das transparente hohle Rohr in eine von der Kulturplatte getrennte Richtung bewegt.

## Revendications

1. Dispositif de culture de plantes (1) comprenant :
une plaque de culture (110) pour maintenir une plante (140) ;
un tube creux transparent (104) qui est positionné au-dessus de la plaque de culture tout en étant espacé de la plaque de culture, et qui a, intérieurement, une section creuse (1000) ;
une lampe (112) qui est positionnée au-dessus du tube creux transparent tout en étant espacée du tube creux transparent, et qui émet de la lumière vers le bas ;
une source de lumière (100) qui introduit de la lumière artificielle dans le tube creux transparent ; et
un conduit d'air (107) qui fournit l'air à la section creuse,
dans lequel le tube creux transparent a une ouverture de ventilation (106) par laquelle l'air fourni à la section creuse est soufflé vers le haut, et
dans lequel le tube creux transparent a un prisme (105) par lequel la lumière artificielle se déplaçant dans une direction longitudinale du tube creux transparent est reflétée vers le haut, dans une position de l'ouverture de ventilation sur une vue en plan.

2. Dispositif de culture de plantes selon la revendication 1,
dans lequel la source de lumière est une première source de lumière qui émet la première lumière artificielle en tant que lumière artificielle,
dans lequel le prisme est un premier prisme,
dans lequel le dispositif de culture de plantes comprend une seconde source de lumière (600) qui introduit la seconde lumière artificielle dans le tube creux transparent, et
dans lequel le tube creux transparent a en outre un second prisme (142) par lequel la seconde lumière artificielle se déplaçant dans la direction longitudinale du tube creux transparent est reflétée vers le bas, dans une position faisant face au premier prisme.

3. Dispositif de culture de plantes selon la revendication 2,
dans lequel la première lumière artificielle est de la lumière bleue ou de la lumière blanche, et
dans lequel la seconde lumière artificielle est de la lumière rouge ou de la lumière blanche.

4. Dispositif de culture de plantes selon la revendication 3,
dans lequel la première lumière artificielle est la lumière bleue, et
dans lequel la seconde lumière artificielle est la lumière rouge.

5. Dispositif de culture de plantes selon l'une quelconque des revendications 1 à 4,
dans lequel une pluralité de tubes creux transparents sont disposés dans une pluralité de positions dans une direction de hauteur.

6. Dispositif de culture de plantes selon l'une quelconque des revendications 1 à 5,
dans lequel, sur une vue en plan du tube creux transparent, un taux d'occupation de surface du prisme est dans une plage de 10 % à 30 % de toute la surface du tube creux transparent.

7. Dispositif de culture de plantes selon l'une quelconque des revendications 1 à 6,
dans lequel le tube creux transparent a une courbure.

8. Dispositif de culture de plantes selon la revendication 7,
dans lequel un rayon de courbure dans la courbure du tube creux transparent est dans une plage de 50 mm à 500 mm.

9. Dispositif de culture de plantes selon l'une quelconque des revendications 1 à 8, comprenant en outre :
un guide (500) qui déplace le tube creux transparent dans une direction séparée de la plaque de culture.
